# FASCICULE DE BREVET EUROPEEN

(11) **EP 2 900 347 B1**
(45) Date de publication et mention de la délivrance du brevet: **07.11.2018**
(21) Numéro de dépôt: 13782754.9
(22) Date de dépôt: 24.09.2013
(51) Int. Cl.: B01D 15/12, B01D 15/32, C11B 7/00

(54) **MÉTHODE ET DISPOSITIF D'ANALYSE DES ACIDES GRAS VOLATILS EN CHROMATOGRAPHIE BASSE PRESSION**
VERFAHREN UND VORRICHTUNG ZUR ANALYSE VON FLÜCHTIGEN FETTSÄUREN MITTELS NIEDERDRUCK-CHROMATOGRAFIE
METHOD AND DEVICE FOR ANALYZING VOLATILE FATTY ACIDS BY MEANS OF LOW-PRESSURE CHROMATOGRAPHY

(30) Priorité: 25.09.2012 FR 1259009
(43) Date de publication de la demande: 05.08.2015
(73) Titulaire: Université d'Aix-Marseille, 13284 Marseille Cedex 07 (FR); Centre National de la Recherche Scientifique (C.N.R.S.), 75794 Paris Cedex 16 (FR)
(72) Inventeur: BOUDENNE, Jean-Luc, F-13009 Marseille (FR); COULOMB, Bruno, 13109 Simiane-Collongue (FR); ROBERT-PEILLARD, Fabien, F-69800 Saint-Priest (FR)
(74) Mandataire: Santarelli
(86) Numéro de dépôt international: PCT/FR2013/052241
(87) Numéro de publication internationale: WO 2014/049261

(56) Documents cités:
- WO-A2-02/01220
- DE-A1- 10 134 658
- GB-A- 635 271
- US-A1- 2012 034 199
- HEUER VERENA ET AL: "Online 13C analysis of volatile fatty acids in sediment/porewater systems by liquid chromatography-isotope ratio mass spectrometry", LIMNOLOGY AND OCEANOGRAPHY: METHODS, AMERICAN SOCIETY OF LIMNOLOGY AND OCEANOGRAPHY, INC, US , vol. 4 1 novembre 2006 (2006-11-01), pages 346-357, XP002698585, ISSN: 1541-5856 Extrait de l'Internet: URL:http://www.aslo.org/lomethods/free/200 6/0346.pdf

## Description

L'invention se place dans le domaine de la surveillance de la qualité de l'environnement, en particulier dans la gestion des déchets et des eaux usées, notamment au sein d'unités de traitement de boues par procédés anaérobies (méthanisation par exemple), dans le cadre de l'exploitation des stations d'épuration biologique, ainsi qu'au niveau des effluents et eaux de l'industrie agro-alimentaire, ou encore de décharges.

Le suivi des installations de méthanisation ou de fermentation est généralement effectué par le contrôle de la quantité totale d'acides gras volatils mesurée par titrimétrie ou fluorescence.

Cependant, des études récentes ont également montré l'importance de déterminer la nature des acides gras volatils présents dans les digesteurs, notamment pour les procédés récemment développés de co-digestion.

Ainsi, l'acide propionique est par exemple une substance inhibitrice dans les processus anaérobies de la digestion à concentration beaucoup plus faible que les autres acides gras volatils (Y Wang et al. Biomass and Bioenergy 33, 5, 848-853, 2009).

Il apparaît donc important de pouvoir discriminer les acides gras volatils pour piloter au mieux les installations de digestion.

Les acides gras volatils peuvent être estimés par la quantification séparée des acides aliphatiques à chaîne carbonée courte par chromatographie ionique ou chromatographie liquide généralement couplée à un détecteur conductimétrique ou spectrophotométrique UV-visible.

La chromatographie liquide haute pression (HPLC) peut également être couplée à des détecteurs de spectrométrie de masse (LC/MS). La chromatographie en phase gazeuse (GC) a également été appliquée, couplée à des détecteurs à ionisation de flamme ou à des spectromètres de masse, les acides carboxyliques étant quantifiés après une étape de dérivation et une étape d'extraction liquide-liquide ou solide-liquide.

On peut également citer des couplages plus complexes de type GC/EI-MS (Spectrométrie de masse à impact d'électron), CG/CI-MS (spectrométrie de masse avec ionisation chimique) avec quantification après micro-extraction en phase solide.

Plus récemment, les acides carboxyliques ont été analysés par électrophorèse capillaire (CE).

Le document WO-A2-02/01220 enseigne l'analyse d'acides gras volatils d'un échantillon par acidification puis analyse par chromatographie gazeuse. Certaines de ces méthodes (LC/MS, GC/MS, GC/FID) ne sont pas compatibles avec l'analyse des acides gras volatils au sein d'une unité de méthanisation par exemple.

D'autres méthodes (chromatographie ionique, électrophorèse capillaire) ont été adaptées mais les équipements nécessaires sont complexes et coûteux avec, par exemple, dans le cas de la chromatographie ionique, l'utilisation de pompes haute pression.

Les systèmes de chromatographie haute pression ont récemment été améliorés par l'utilisation de colonnes monolithiques, permettant ainsi d'améliorer les performances de séparation tout en travaillant à des débits élevés, le temps d'analyse s'en trouvant notablement réduit (G. Guiochon, Journal of chromatography A, 1168, 101-168, 2007).

De tels systèmes ont, par exemple, été développés pour l'analyse de mycotoxines dans des échantillons alimentaires (W.S. Kayoon et al. Food chemistry, 133, 2 489-496, 2012) ou bien encore pour l'analyse de pesticides dans des échantillons environnementaux (J. Wang et al., Journal of séparation science, 30, 3-7, 2007).

Les colonnes de séparation de silice greffée monolithique ont également été utilisées au sein de systèmes basse pression appelés SIC (Sequential Injection Chromatography) pour la séparation et la quantification de composés pharmaceutiques ou de pesticides (P. Chocolous et al., Analytica Chimica Acta, 600, 129-135, 2007). La pompe haute pression est alors remplacée par un moyen d'injection en basse pression.

A la connaissance de la demanderesse, ces colonnes de séparation de silice greffée monolithique n'ont jamais été utilisées jusqu'à présent pour séparer et quantifier des acides gras volatils dans un système basse pression, encore moins dans un système basse pression en continu.

Or, les inventeurs se sont rendus compte que l'utilisation d'une colonne chromatographique de silice greffée monolithique permet la séparation rapide des acides gras volatils, de façon simple (du fait de la basse pression) et peu coûteuse.

Ainsi, l'invention concerne une méthode de séparation par chromatographie en basse pression des acides gras volatils contenus dans un échantillon, préférentiellement en continu, dans laquelle :
- Dans une étape a), on fait une pré-dérivation des acides gras volatils contenus dans l'échantillon ;
- Dans une étape b), on sépare lesdits acides gras volatils pré-dérivés à l'étape a) sur une colonne de silice greffée monolithique.

Dans un mode de réalisation préféré, l'invention concerne une méthode de séparation par chromatographie en basse pression des acides gras volatils contenus dans un échantillon, préférentiellement en continu, dans laquelle :
- Dans une étape a), on fait une pré-dérivation des acides gras volatils contenus dans l'échantillon ;
- Dans une étape b), on sépare lesdits acides gras volatils pré-dérivés à l'étape a) sur une colonne de silice greffée monolithique ;
- Dans une étape c), on mesure les valeurs d'absorbance et/ou transmittance et/ou de fluorescence induite par les acides gras volatils pré-dérivés séparés à l'étape b) ;
- Dans une étape d), on quantifie les acides gras volatils pré-dérivés.

Selon l'invention, par « colonne de silice greffée monolitique », on entend une colonne constituée d'une pièce unique de gel de silice, appelée monolithe, présentant une structure macroporeuse et mésoporeuse, greffée par des groupements octadécyl (C18) ou octyl (C8).

Comme exemple de colonne, on peut citer la colonne Onyx RP C18^{R} commercialisée par la société Phenomenex, ou encore la colonne Chromolith RP-18^{R} commercialisée par la société Merck.

Selon l'invention, par « acide gras volatil », il est entendu un acide gras aliphatique à chaîne carbonée de moins de dix atomes de carbones, préférentiellement de moins de six atomes de carbone, dont l'acide formique, l'acide acétique, l'acide propionique, l'acide butyrique, l'acide valérique et l'acide caproïque, ainsi que leurs isomères (acide isobutyrique, acide isopentanoïque, acide néopentanoïque, acide 2,2-diméthylbutanoïque, acide 2,3-diméthylbutanoïque, acide 2-méthylpentanoïque, acide 3-méthylpentanoïque).

Ces acides gras volatils peuvent être séparés selon la méthode de l'invention grâce notamment à la dérivation de leur groupe fonctionnel acide carboxylique et à leur différence de polarité, d'hydrophobicité, d'encombrement stérique et de constante d'acidité des dérivés formés.

Selon l'invention, par « en basse pression », il est entendu une pression inférieure à 25 bars, préférentiellement inférieure à 7 bars.

Selon l'invention, par « solvant organique miscible à l'eau » il est entendu un solvant choisi parmi le méthanol, l'éthanol, l'acétonitrile, l'acétone et le diméthylformamide.

Selon l'invention, l'échantillon, dont on veut séparer les acides gras volatils, peut être un échantillon de déchets ou d'eaux usées ou de sols ou de boues issues d'une unité de traitement de boues par méthanisation, avantageusement dans les procédés anaérobies ou, encore, un échantillon issu de l'exploitation des stations d'épuration biologiques.

Il est bien entendu que, dans le cas d'un échantillon solide, celui-ci peut être traité, par exemple, par mélange avec un liquide afin de le rendre suffisamment liquide pour pouvoir être analysé selon la méthode de l'invention.

Il est également bien entendu que les échantillons peuvent être traités par filtration, centrifugation ou autre avant d'être utilisés.

Par « en continu » selon l'invention, il est entendu que les différentes opérations successives nécessaires à la séparation des acides gras volatils s'enchaînent sans interruption, à partir du moment où l'échantillon est introduit dans le système.

Il est donc possible de connaître à un instant T correspondant au moment du prélèvement de l'échantillon le niveau des acides gras volatils présents dans cet échantillon.

Il peut même être envisagé que l'étape de prélèvement de l'échantillon soit également une des étapes réalisées en continu.

Ainsi, « en continu » selon l'invention couvre également le cas où un échantillon est prélevé par exemple à l'aide d'un module de filtration placé dans ou relié à l'eau, le déchet, le sol, la boue ou autre type d'échantillon à analyser, puis introduit directement dans le système, sans intervention humaine.

Selon l'invention, l'étape a) de pré-dérivation des acides gras volatils contenus dans l'échantillon peut elle-même être séparée en plusieurs sous-étapes :
- Dans une première sous-étape 1, on mélange un échantillon à analyser avec une solution d'au moins un agent activateur primaire des carbones porteurs des groupements fonctionnels carboxyliques et on incube ce mélange pendant un temps compris entre 2 et 8 minutes, préférentiellement entre 4 et 6 minutes ;
- Dans une seconde sous-étape 2, on ajoute au mélange obtenu à la première sous-étape 1 une amine primaire fluorescente ;
- Dans une troisième sous-étape 3, on incube le mélange obtenu à la sous-étape 2 pendant un temps compris entre 0 et 5 minutes, préférentiellement 1 minute.

Selon l'invention, l'agent activateur primaire des carbones porteurs des groupements fonctionnels carboxyliques peut être choisi parmi les carbodiimides, comme par exemple le 1-éthyl-3-(3-diméthylaminopropyl)-carbodiimide (EDC) ou le *N*-Cyclohexyl-*N*'-(2-morpholinoethyl)carbodiimide méthyl-*p*-toluènesulfonate (CMC) ou encore le N, N'-dicyclohexylcarbodiimide (DCC), le N,N'-Diisopropylcarbodiimide (DIC), le Bis(triméthylsilyl)carbodiimide (BTSC) et, préférentiellement, de l'EDC ou du CMC très préférentiellement de l'EDC.

Selon l'invention, ledit agent activateur primaire peut être à une concentration comprise entre 1 et 200 mg par ml d'échantillon à analyser, préférentiellement de 5 à 30 mg et très préférentiellement 15 mg par ml d'échantillon à analyser.

Avantageusement, il peut être dissout dans un solvant organique miscible à l'eau sous forme d'une solution mère dont l'homme du métier saura adapter la concentration entre autre en tenant compte de l'appareillage utilisé et du volume de produit à analyser.

Par exemple, dans le cas de l'EDC, la solution mère peut être préparée par dissolution de l'EDC à une concentration comprise entre 1 et 200g/L, celui-ci peut être préférentiellement dissout dans de l'éthanol.

Selon l'invention, dans la sous-étape 1, il est possible que l'échantillon à analyser soit mélangé avec, en outre, une solution d'au moins un agent activateur secondaire, activateur des carbodiimides, eux-mêmes activateurs des carbones porteurs des groupements fonctionnels carboxyliques. Selon l'invention, l'agent activateur secondaire peut être choisi parmi la N-hydroxysuccinimide (NHS) ou du 1-hydroxybenzotriazole (HOBT) ou du tétrafluorophénol (TTP) ou du 1-hydroxy-7-azabenzotriazole (HOAT), préférentiellement de l'HOAT.

Selon l'invention, ledit agent activateur secondaire peut être à une concentration comprise entre 0 et 100 mg par ml d'échantillon à analyser, préférentiellement entre 25 et 70 mg et très préférentiellement 60 mg par ml d'échantillon à analyser.

Avantageusement, il peut être dissout dans l'eau ou dans un tampon aqueux de pH compris entre 3 et 4, préférentiellement de pH égal à 3,6. Ledit tampon aqueux peut être préparé à partir d'une solution mère dont l'homme du métier saura adapter la concentration entre autre en tenant compte de l'appareillage utilisé et du volume de produit à analyser.

Préférentiellement selon l'invention, dans la première sous-étape 1, on peut mélanger un échantillon à analyser avec une solution d'au moins un agent activateur primaire des carbones porteurs des groupements fonctionnels carboxyliques et avec une solution d'au moins un agent activateur secondaire.

Selon l'invention, l'amine primaire fluorescente peut être un composé de la famille des benzofurazanes ou de la famille des aminophénanthrènes ou de la famille des coumarines ou de la famille des dérivés "dansyles", du N-1-éthylènediaminonaphthalène (EDAN) ou de la 5-aminofluorescéine (5-AF) ou de la monodansylcadavérine (MDC) ou du chlorure de bleu du Nil (NBCl), préférentiellement de l'EDAN.

L'amine primaire fluorescente peut être à une concentration comprise entre 0,01 et 10 mg par ml d'échantillon à analyser, préférentiellement entre 0,1 et 2 mg par ml d'échantillon à analyser, très préférentiellement 0,5 mg par ml d'échantillon à analyser.

Avantageusement, l'amine primaire fluorescente peut être dissoute dans un solvant mixte préparé à partir d'une solution aqueuse de pH compris entre 8 et 14, préférentiellement de pH égal à 12 et de tout solvant organique miscible à l'eau, préférentiellement l'éthanol, dont le pourcentage volumique par rapport à l'eau peut être compris entre 0 et 50%, préférentiellement 30%.

Selon l'invention, à l'étape b) de la méthode de séparation, on sépare lesdits acides gras volatils pré-dérivés obtenus à l'étape a) sur une colonne de silice greffée monolithique.

Selon l'invention, lors de l'étape b), on peut introduire le contenu de la boucle d'injection du système de chromatographie préalablement remplie avec un volume compris entre 10 et 500µl, préférentiellement 100µl, de mélange pré-dérivé obtenu à l'étape a) dans la colonne de séparation, elle-même préalablement stabilisée avec l'éluant qui pourra servir à séparer les acides gras volatils pré-dérivés.

On peut ensuite injecter l'éluant à travers la colonne de séparation de silice greffée monolithique.

Selon l'invention, l'éluant peut être un solvant mixte (solvant organique/tampon).

Le solvant organique peut être avantageusement choisi parmi tout solvant organique miscible à l'eau selon l'invention et compatible avec la colonne de séparation, avantageusement l'acétonitrile et le méthanol, préférentiellement de l'acétonitrile et peut être mélangé à une solution tampon en phase aqueuse dont le pH est compatible avec la colonne de séparation et peut être compris entre 2 et 7,5, préférentiellement égal à 3.

Ledit tampon peut, par exemple, être préparé à partir d'acide formique, d'acide chlorhydrique, de phosphates, d'acide 2-morpholino éthanesulfonique (MES), avantageusement préparé à partir d'acide formique et d'eau préférentiellement ultrapure.

Les proportions entre le solvant organique et le tampon en phase aqueuse dépendent de la colonne de séparation utilisée et du matériel utilisé pour la percolation, cependant avantageusement selon l'invention la proportion de solvant organique constituant le solvant mixte (solvant organique/tampon) peut être comprise entre 10 et 50%, et très préférentiellement 35%.

Dans un mode de réalisation particulier, la méthode de séparation de l'invention peut comprendre en outre une étape c) de mesure des valeurs d'absorbance et/ou transmittance et/ou de fluorescence induite par les acides gras volatils pré-dérivés séparés à l'étape b).

Selon ce mode de réalisation préféré, à l'étape c) de la méthode de séparation, on peut mesurer en sortie de colonne les acides gras volatils pré-dérivés par toute méthode permettant de mesurer les acides gras volatils pré-dérivés selon l'invention.

Plus particulièrement, on peut mesurer l'absorbance et/ou la transmittance et/ou la fluorescence induite par les acides gras volatils pré-dérivés et séparés du mélange obtenu précédemment.

Dans le cas de la mesure de l'absorbance, ceci peut être possible par exemple à une longueur d'onde comprise entre 300 et 350 nm, préférentiellement de 327 nm.

Dans le cas de la mesure de la fluorescence, ceci peut être possible par exemple à une longueur d'onde comprise entre 350 et 490 nm, de préférence 442 nm, après excitation à une longueur d'onde comprise entre 300 à 350 nm, de préférence 335 nm, pendant une durée de 1 à 30 minutes, préférentiellement 10 minutes.

Dans un autre mode de réalisation particulier, la méthode de séparation de l'invention peut comprendre en outre une étape d) de quantification des acides gras volatils pré-dérivés.

Dans une étape d), on peut quantifier les acides gras volatils pré-dérivés par toute méthode connue de l'homme du métier.

Cette étape peut intervenir soit après l'étape b) soit après l'étape c) si celle-ci a lieu.

De préférence, la méthode de séparation de l'invention comprend les étapes c) et d) et l'étape c) est préalable à l'étape d).

En particulier, au cours de l'étape d), on pourra par exemple reporter les valeurs obtenues à l'étape c) sur une courbe étalon préalablement établie dans les mêmes conditions.

Selon l'invention, on peut reporter les valeurs d'absorbance, de fluorescence ou de transmittance obtenues par la mesure de l'absorbance, de la fluorescence ou de la transmittance sur des courbes étalons préalablement établies dans les mêmes conditions avec des acides gras volatils de référence.

Selon l'invention, à l'étape d) du procédé de détermination des acides gras volatils dérivés, ladite courbe étalon peut être préalablement établie à l'aide de chacun des acides gras volatils d'intérêt dans le cadre de l'invention, c'est-à-dire par exemple l'acide formique, l'acide acétique, l'acide propionique, l'acide butyrique, l'acide valérique et l'acide caproïque, ou leurs isomères.

Selon encore une autre variante de l'invention, la méthode peut comprendre en outre une étape de rééquilibrage de la colonne.

Selon l'invention, il est possible d'injecter le même mélange que l'éluant utilisé à l'étape b) à une concentration en solvant organique plus élevée que dans ledit éluant afin de faire revenir le dispositif à sa position initiale.

Ainsi, la proportion de solvant organique dans le solvant mixte peut être supérieure à 50% et avantageusement égale à 80%.

Suite à ce rééquilibrage, il est possible de procéder à l'analyse d'un autre échantillon.

L'invention concerne également l'utilisation d'une colonne de silice greffée monolithique dans une méthode de séparation par chromatographie en basse pression des acides gras volatils dans un échantillon, préférentiellement en continu.

L'invention porte aussi sur un dispositif d'analyse par chromatographie en basse pression des acides gras volatils comprenant au moins 2 modules généraux à savoir :
- un module de réaction permettant la réalisation des réactions de dérivation des acides gras volatils d'intérêt avant séparation ;
- un module de séparation des acides gras volatils d'intérêt préalablement dérivés.

Dans un mode de réalisation particulier, l'invention porte aussi sur un dispositif d'analyse par chromatographie en basse pression des acides gras volatils comprenant au moins 3 modules généraux à savoir :
- un module de réaction permettant la réalisation des réactions de dérivation des acides gras volatils d'intérêt avant séparation ;
- un module de séparation des acides gras volatils d'intérêt préalablement dérivés ;
- un module de mesure pour la quantification des acides gras volatils.

Selon une variante de l'invention, ledit dispositif d'analyse des acides gras volatils en chromatographie en basse pression peut comprendre en outre un module de filtration.

Ledit module de filtration, qui peut être placé dans ou être relié à la source de l'échantillon à analyser, peut en outre permettre d'en prélever un échantillon.

Selon une autre variante de l'invention, ledit dispositif peut être thermostaté, entièrement ou en partie.

Selon l'invention, ledit module de réaction pourra comprendre tout dispositif utile à son fonctionnement, comme par exemple :
∘ des moyens de stockage des échantillons à analyser et/ou des réactifs nécessaires à la réalisation des réactions de dérivation des acides gras volatils d'intérêt ;
∘ des moyens d'aspiration et de poussée des échantillons et des réactifs comme par exemple des pompes basse pression, des électrovannes de commutation et/ou des micropompes de types solénoïdes, des burettes automatiques, avantageusement pilotables à distance ;
∘ au moins un réacteur dans lequel la réaction de dérivation pourra être réalisée, ledit réacteur pouvant avantageusement être maintenu sous agitation ;
∘ des moyens de liaison entre chaque élément du module.

Selon l'invention, ledit module de séparation des acides gras volatils d'intérêt préalablement dérivés pourra comprendre tout dispositif utile à son fonctionnement, comme par exemple :
∘ au moins une colonne de séparation de silice greffée monolithique,
∘ au moins un moyen d'injection par exemple une électrovanne d'injection avantageusement pilotable à distance,
∘ une boucle d'injection et
∘ des moyens de stockage des solutions permettant l'élution et le nettoyage de la colonne de séparation ;
∘ des moyens de liaison entre chaque élément du module.

Selon l'invention, le module de mesure pourra comprendre tout dispositif permettant de mesurer l'intensité du signal lié à la présence des dérivés des acides gras volatils.

Ladite mesure peut être par exemple par absorbance, transmittance ou par mesure de l'intensité de fluorescence. Ledit dispositif de mesure pourra être par exemple un détecteur optique.

A cet égard, on peut citer les détecteurs tels que le spectromètre USB2000 commercialisé par la société Ocean Optics ou le spectromètre Avaspec commercialisé par la société Avantès.

Bien évidement, selon l'invention, les différents modules pourront être reliés entre eux par des moyens de liaisons, comme par exemple des tubulures en tout matériau compatible avec la fonction.

De même, il est envisageable que des moyens d'aspiration et de poussée des échantillons et des réactifs comme par exemple des pompes basse pression, des électrovannes de commutation et/ou des micropompes de types solénoïdes, des burettes automatiques, avantageusement pilotables à distance, soient également présents entre chaque module du dispositif.

Selon l'invention, les moyens de liaisons, qu'ils soient entre les différents éléments internes à chaque module ou qu'ils relient les différents modules entre eux, pourront être par exemple des tubulures en tout matériau compatible avec la fonction, comme par exemple en tygon, viton ou en téflon, de préférence en téflon.

Les dimensions desdits moyens de liaison seront bien évidement fonction de l'appareillage utilisé et de la disposition des différents éléments les uns par rapport aux autres.

L'homme du métier saura adapter la taille des tubulures en fonction de ces éléments.

On peut imaginer que les tubulures pourront avoir un diamètre interne compris entre 0,4 mm et 1.2 mm, préférentiellement 0,8 mm.

Il est compréhensible que les commandes des burettes automatiques, des électrovannes et/ou du détecteur doivent respecter un ordre chronologique.

Ainsi, avantageusement selon l'invention, l'ensemble du dispositif pourra être piloté par un ordinateur ou par un dispositif électronique à microprocesseur.

Par exemple, le dispositif peut être piloté par un logiciel commercial de type Labview de National Instrument ou, de préférence, par un logiciel spécifiquement programmé pour le dispositif. Ce logiciel pourra être conçu de telle façon que l'opérateur puisse utiliser ou modifier une méthode comprenant un enchainement de commandes permettant la quantification des acides gras volatils.

On comprend que, selon l'invention, la chronologie d'utilisation dudit dispositif commence par le prélèvement d'un échantillon à analyser qui est alors introduit dans le réacteur dudit module de réaction, suivi par l'injection dans ledit réacteur à partir des moyens de stockage de différents réactifs nécessaires à la réalisation des réactions de dérivation des acides gras volatils d'intérêt contenus dans ledit échantillon.

Après un temps de réaction défini, le mélange réactionnel pourra alors être injecté au travers d'une boucle d'injection dans la colonne de séparation de silice greffée monolithique dudit module de séparation suivi de l'injection dans la colonne des différentes solutions nécessaires à l'élution de la colonne.

La sortie de la colonne étant reliée aux appareils de mesure dudit module de mesure, l'analyse des acides gras volatils pourra alors être réalisée avantageusement en continu.

Les valeurs mesurées peuvent être alors récupérées et analysées, par exemple par un ordinateur par comparaison à des courbes étalon préalablement établies, ce qui permet de déterminer la nature et/ou de mesurer la quantité des différents acides gras volatils contenus dans l'échantillon de départ.

D'autres avantages et caractéristiques de l'invention apparaîtront à l'observation des dessins annexés dans lesquels on voit que :
- la figure 1 présente des courbes étalons établies avec un mélange d'acides acétique, propionique, n-butyrique et n-valérique à des concentrations comprises entre 0 et 2 g/L.

La figure présente l'aire des pics obtenus par la mesure de l'absorbance à 327 nm en fonction de la concentration en acide acétique, propionique, n-butyrique et n-valérique.
- la figure 2 présente un exemple de chromatogramme obtenu après analyse des acides gras contenus dans un échantillon issu d'une station d'épuration réalisé selon la méthode de l'invention et avec un dispositif selon l'invention.

### Exemple 1 : Etablissement d'une courbe étalon :

Un volume de 100 µL de solution étalon (mélange d'acides acétique, propionique, n-butyrique et n-valérique à des concentrations comprises entre 0 et 2 mg/mL) est introduit dans le module de réaction et est mélangé avec 1 mL d'une solution d'HOAT à une concentration de 6 mg/mL, à un pH égal à 3,6 dans de l'eau ultrapure et 100 µL d'une solution d'EDC à une concentration de 15 mg/mL préparée dans de l'éthanol.

Le mélange est maintenu sous agitation pendant 285 secondes puis 100 µL d'une solution d'EDAN sont introduits dans le module de réaction et ajoutés au mélange précédent.

La solution d'EDAN est à une concentration de 0,5 mg/mL, préparée dans un solvant mixte phase aqueuse (75%) et éthanol (25%).

La phase aqueuse est constituée d'une solution d'hydroxyde de sodium à 0,7 moles/L et de phosphates à 0,5 moles/L de pH égal à 13.

Après une agitation de 60 secondes, le module de réaction est vidangé et le mélange est introduit dans une colonne de séparation de silice greffée monolithique de type C18 (Phenomenex Onyx RP C18) préalablement stabilisée avec un éluant composé d'acétonitrile (35%) et d'acide formique à une concentration de 1 g/L (65%) via une boucle d'injection de 100 µL. Un éluant composé d'acétonitrile (35%) et d'acide formique à une concentration de 1 g/L (65%) est pompé et introduit à un débit de 0,75 mL/minute dans la colonne. Les acides gras volatils sont quantifiés en sortie de colonne de séparation par la mesure de l'absorbance à 327 nm grâce à un spectromètre USB2000 de Ocean Optics.

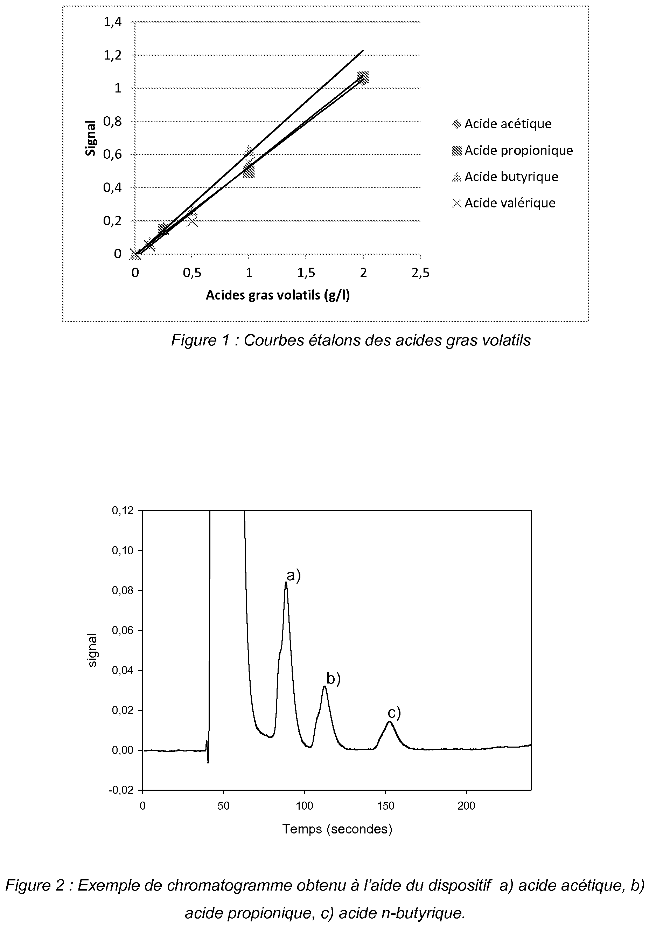

On obtient ainsi, pour chaque concentration de chaque acide, la surface du pic d'absorbance (signal) que l'on reporte en fonction de la concentration pour obtenir la courbe étalon (voir figure 1).

### Exemple 2 : mesure des acides gras volatils contenus dans un échantillon :

Un volume de 100 µL d'échantillon issu d'un digesteur de boues de stations d'épuration est introduit dans le module de réaction et est mélangé avec 1 mL d'une solution d'HOAT à une concentration de 6 mg/mL, à un pH égal à 3,6 dans de l'eau ultrapure et 100 µL d'une solution d'EDC à une concentration de 15 mg/mL préparée dans de l'éthanol.

Le mélange est maintenu sous agitation pendant 285 secondes puis 100 µL d'une solution d'EDAN sont introduits dans le module de réaction et ajoutés au mélange précédent.

La solution d'EDAN est à une concentration de 0,5 mg/mL préparée dans un solvant mixte phase aqueuse (75%) et éthanol (25%).

La phase aqueuse est constituée d'une solution d'hydroxyde de sodium à 0,7 moles/L et de phosphates à 0,5 moles/L.

Après une agitation de 60 secondes, le réacteur est vidangé et le mélange est introduit dans une colonne de séparation de silice greffée monolithique de type C18 (Phenomenex Onyx RP C18^{R}) via une boucle d'injection de 100 µL.

Un éluant composé d'acétonitrile (35%) et d'acide formique à une concentration de 1 mg/mL (65%) est pompé et introduit à un débit de 0,75 mL/minute dans la colonne.

Les acides gras volatils sont identifiés et quantifiés en sortie de colonne de séparation par la mesure de l'absorbance à 327 nm grâce à un spectromètre USB2000 de la société Ocean Optics.

Ainsi sur la figure 2, le pic A, qui correspond à l'acide acétique, présente une aire de 0,58.

Cette aire, reportée sur la droite d'étalonnage, permet de calculer une concentration de 1,1 g/L d'acide acétique dans l'échantillon.

De la même manière, les aires de 0,46 et 0,27, respectivement obtenues pour les pics B et C, représentent des concentrations de 0,46 g/L d'acide propionique et de 0,27 g/L d'acide butyrique.

## Revendications

1. Méthode de séparation par chromatographie en basse pression des acides gras volatils dans un échantillon dans laquelle :
- Dans une étape a), on fait une pré-dérivation des acides gras volatils contenus dans l'échantillon ;
- Dans une étape b), on sépare lesdits acides gras volatils pré-dérivés à l'étape a) sur une colonne de silice greffée monolithique ;

2. Méthode de séparation par chromatographie en basse pression des acides gras volatils dans un échantillon selon la revendication 1, dans laquelle :
- Dans une étape a), on fait une pré-dérivation des acides gras volatils contenus dans l'échantillon ;
- Dans une étape b), on sépare lesdits acides gras volatils pré-dérivés à l'étape a) sur une colonne de silice greffée monolithique ;
- Dans une étape c), on mesure les valeurs d'absorbance et/ou transmittance et/ou de fluorescence induite par les acides gras volatils pré-dérivés séparés à l'étape b).
- Dans une étape d), on quantifie les acides gras volatils pré-dérivés.

3. Méthode selon l'une quelconque des revendications 1 ou 2, **caractérisée en ce qu'**elle est réalisée en continu.

4. Méthode selon l'une quelconque des revendications 1 à 3, **caractérisée en ce que** l'étape a) de pré-dérivation comprend :
- une première sous-étape 1, dans laquelle on mélange un échantillon à analyser avec une solution d'au moins un agent activateur primaire des carbones porteurs des groupements fonctionnels carboxyliques et on incube ce mélange pendant un temps compris entre 2 et 8 minutes, préférentiellement entre 4 et 6 minutes ;
- dans une seconde sous-étape 2, on ajoute au mélange obtenu à la première sous-étape 1 une amine primaire fluorescente ;
- dans une troisième sous-étape 3, on incube le mélange obtenu à la sous-étape 2 pendant un temps compris entre 0 et 5 minutes, préférentiellement 1 minute.

5. Méthode selon la revendication 4, **caractérisée en ce que** l'agent activateur primaire des carbones porteurs des groupements fonctionnels carboxyliques est choisi parmi les carbodiimides, comme par exemple le 1-éthyl-3-(3-diméthylaminopropyl)-carbodiimide (EDC) ou le *N*-Cyclohexyl-*N*'-(2-morpholinoethyl)carbodiimide méthyl-p-toluènesulfonate (CMC), ou encore le N, N'-dicyclohexylcarbodiimide (DCC), le N,N'-Diisopropylcarbodiimide (DIC), le Bis(triméthylsilyl)carbodiimide (BTSC), et préférentiellement de l'EDC ou du CMC, très préférentiellement de l'EDC.

6. Méthode selon l'une des revendications 4 ou 5, **caractérisée en ce que** l'agent activateur primaire est à une concentration comprise entre 1 et 200 mg par ml d'échantillon à analyser, préférentiellement entre 5 et 30 mg et très préférentiellement 15 mg par ml d'échantillon à analyser.

7. Méthode selon l'une quelconque des revendications 4 à 6, **caractérisée en ce que**, à la première sous-étape 1, l'échantillon est en outre mélangé avec une solution comprenant au moins un agent activateur secondaire choisi parmi la N-hydroxysuccinimide (NHS) ou du 1-hydroxybenzotriazole (HOBT) ou du tétrafluorophénol (TTP) ou du 1-hydroxy-7-azabenzotriazole (HOAT), préférentiellement de l'HOAT.

8. Méthode selon la revendication 7, **caractérisée en ce que** l'agent activateur secondaire est utilisé à une concentration comprise entre 0 et 100 mg par ml d'échantillon à analyser, préférentiellement entre 25 et 70 mg et très préférentiellement 60 mg par ml d'échantillon à analyser.

9. Méthode selon l'une quelconque des revendications 4 à 8, **caractérisée en ce que** l'amine primaire fluorescente est un composé de la famille des benzofurazanes ou de la famille des aminophénanthrènes ou de la famille des coumarines ou de la famille des dérivés "dansyles", du N-1-éthylènediaminonaphthalène (EDAN) ou de la 5-aminofluorescéine (5-AF) ou de la monodansylcadavérine (MDC) ou du chlorure de bleu du Nil (NBCI), préférentiellement de l'EDAN.

10. Méthode selon l'une quelconque des revendications 4 à 9, **caractérisée en ce que** l'amine primaire fluorescente est utilisée à une concentration comprise entre 0,01 et 10 mg par ml d'échantillon à analyser, préférentiellement entre 0,1 et 2 mg par ml d'échantillon à analyser, très préférentiellement 0,5 mg par ml d'échantillon à analyser.

11. Méthode selon l'une quelconque des revendications 1 à 10, **caractérisée en ce que** la colonne de l'étape b) est choisie parmi une colonne monolitique greffée par des groupements octadécyl (C18) ou octyl (C8), préférentiellement une colonne monolitique greffée par des groupements octadécyl (C18).

12. Dispositif d'analyse par chromatographie en basse pression des acides gras volatils comprenant au moins deux modules généraux, à savoir :
- un module de réaction permettant la réalisation des réactions de dérivation des acides gras volatils d'intérêt avant séparation, comprenant :
∘ des moyens de stockage des échantillons à analyser et/ou des réactifs nécessaires à la réalisation des réactions de dérivation des acides gras volatils d'intérêt;
∘ des moyens d'aspiration et de poussée des échantillons et des réactifs comme par exemple des pompes basse pression, des électrovannes de commutation et/ou des micropompes de types solénoïdes, des burettes automatiques, avantageusement pilotables à distance ;
∘ au moins un réacteur dans lequel la réaction de dérivation pourra être réalisée, ledit réacteur pouvant avantageusement être maintenu sous agitation ;
∘ des moyens de liaison entre chaque élément du module ;
- un module de séparation des acides gras volatils d'intérêt préalablement dérivés :
∘ au moins une colonne de séparation de silice greffée monolithique,
∘ au moins un moyen d'injection par exemple une électrovanne d'injection avantageusement pilotable à distance,
∘ une boucle d'injection
∘ des moyens de stockage des solutions permettant l'élution et le nettoyage de la colonne de séparation ;
∘ des moyens de liaison entre chaque élément du module.

13. Dispositif d'analyse selon la revendication 12, **caractérisé en ce qu'**il comprend en outre un module de mesure pour la quantification des acides gras volatils.

## Patentansprüche

1. Verfahren zum chromatografischen Trennen von flüchtigen Fettsäuren in einer Probe unter niedrigem Druck, bei dem:
- in einem Schritt a) eine Vorderivatisierung von in der Probe enthaltenen flüchtigen Fettsäuren erfolgt;
- in einem Schritt b) die genannten in Schritt a) vorderivatisierten flüchtigen Fettsäuren auf eine monolithische gepfropfte Siliciumoxidsäule getrennt werden.

2. Verfahren zum chromatografischen Trennen von flüchtigen Fettsäuren in einer Probe unter niedrigem Druck nach Anspruch 1, bei dem:
- in einem Schritt a) eine Vorderivatisierung von in der Probe enthaltenen flüchtigen Fettsäuren erfolgt;
- in einem Schritt b) die genannten in Schritt a) vorderivatisierten flüchtigen Fettsäuren auf eine monolithische gepfropfte Siliciumoxidsäule getrennt werden;
- in einem Schritt c) ein Absorbanz- und/oder Transmittanz- und/oder Fluoreszenzwert gemessen wird, der durch die in Schritt b) getrennten vorderivatisierten flüchtigen Fettsäuren eingeleitet wird;
- in einem Schritt d) die vorderivatisierten flüchtigen Fettsäuren quantifiziert werden.

3. Verfahren nach Anspruch 1 oder 2, **dadurch gekennzeichnet, dass** es kontinuierlich durchgeführt wird.

4. Verfahren nach einem der Ansprüche 1 bis 3, **dadurch gekennzeichnet, dass** der Vorderivatisierungsschritt a) Folgendes beinhaltet:
- einen ersten Unterschritt 1, in dem eine zu analysierende Probe mit einer Lösung von wenigstens einem primären Aktivierungsmittel der Trägerkohlenstoffe von funktionellen Carbonsäuregruppen gemischt wird und dieses Gemisch für eine Zeit zwischen 2 und 8 Minuten, vorzugsweise zwischen 4 und 6 Minuten inkubiert wird;
- in einem zweiten Unterschritt 2 dem im ersten Unterschritt 1 erhaltenen Gemisch ein fluoreszentes primäres Amin zugegeben wird;
- in einem dritten Unterschritt 3 das in Unterschritt 2 erhaltene Gemisch für eine Zeit zwischen 0 und 5 Minuten, vorzugsweise von 1 Minute inkubiert wird.

5. Verfahren nach Anspruch 4, **dadurch gekennzeichnet, dass** das primäre Aktivierungsmittel der Trägerkohlenstoffe von funktionellen Carbonsäuregruppen ausgewählt wird aus Carbodiimiden wie zum Beispiel 1-Ethyl-3-(3-dimethylaminopropyl)-carbodiimid (EDC) oder *N*-Cyclohexyl-*N*'-(2-morpholinoethyl)carbodiimid-methyl-*p*-toluolsulfonat (CMC) oder N,N'-Dicyclohexylcarbodiimid (DCC), N,N'-Diisopropylcarbodiimid (DIC), Bis(trimethylsilyl)carbodiimid (BTSC) und vorzugsweise EDC oder CMC, sehr bevorzugt EDC.

6. Verfahren nach Anspruch 4 oder 5, **dadurch gekennzeichnet, dass** das primäre Aktivierungsmittel in einer Konzentration zwischen 1 und 200 mg pro ml zu analysierender Probe, vorzugsweise zwischen 5 und 30 mg und sehr bevorzugt 15 mg pro ml zu analysierender Probe vorliegt.

7. Verfahren nach einem der Ansprüche 4 bis 6, **dadurch gekennzeichnet, dass** im ersten Unterschritt 1 die Probe ferner mit einer Lösung gemischt wird, die wenigstens ein sekundäres Aktivierungsmittel umfasst, ausgewählt aus N-Hydroxysuccinimid (NHS) oder 1-Hydroxybenzotriazol (HOBT) oder Tetrafluorphenol (TTP) oder 1-Hydroxy-7-azabenzotriazol (HOAT), vorzugsweise HOAT.

8. Verfahren nach Anspruch 7, **dadurch gekennzeichnet, dass** das sekundäre Aktivierungsmittel in einer Konzentration zwischen 0 und 100 mg pro ml zu analysierender Probe, vorzugsweise zwischen 25 und 70 mg und sehr bevorzugt 60 mg pro ml zu analysierender Probe benutzt wird.

9. Verfahren nach einem der Ansprüche 4 bis 8, **dadurch gekennzeichnet, dass** das fluoreszente primäre Amin eine Verbindung der Benzofurazanfamilie oder der Aminophenanthrenfamilie oder der Coumarinfamilie oder der Familie der "Dansyl"-Derivate, N-1-Ethylendiaminonaphthalen (EDAN) oder 5-Aminofluoreszein (5-AF) oder Monodansylcadaverin (MDC) oder Nilblau-Chlorid (NBCl), vorzugsweise EDAN ist.

10. Verfahren nach einem der Ansprüche 4 bis 9, **dadurch gekennzeichnet, dass** das fluoreszente primäre Amin in einer Konzentration zwischen 0,01 und 10 mg pro ml zu analysierender Probe, vorzugsweise zwischen 0,1 und 2 mg pro ml zu analysierender Probe, sehr bevorzugt 0,5 mg pro ml zu analysierender Probe benutzt wird.

11. Verfahren nach einem der Ansprüche 1 bis 10, **dadurch gekennzeichnet, dass** die Säule aus Schritt b) ausgewählt wird aus einer monolithischen durch Octadecyl-(C18)- oder durch Octyl-(C8)-Gruppen-gepfropften Säule, vorzugsweise eine monolithische durch Octadecylgruppen (C18)-gepfropfte Säule ist.

12. Vorrichtung zum chromatografischen Analysieren von flüchtigen Fettsäuren unter niedrigem Druck, die wenigstens zwei allgemeine Module umfasst, nämlich:
- ein Reaktionsmodul, das die Durchführung von Reaktionen zum Derivatisieren von flüchtigen Fettsäuren von Interesse vor dem Trennen zulässt, das Folgendes umfasst:
o Mittel zum Lagern der zu analysierenden Proben und/oder von Reaktionsmitteln, die für die Durchführung der Reaktionen zum Derivatisieren von flüchtigen Fettsäuren von Interesse notwendig sind;
∘ Mittel zum Ansaugen und Unterdrucksetzen der Proben und der Reaktionsmittel wie zum Beispiel Niederdruckpumpen, Umschaltelektroventile und/oder Mikropumpen des Solenoidtyps, automatische Büretten, die vorteilhafterweise fernsteuerbar sind;
∘ wenigstens einen Reaktor, in dem die Derivatisierungsreaktion durchgeführt werden kann, wobei der Reaktor vorteilhafterweise ständig gerührt wird;
∘ Mittel zum Verbinden zwischen den einzelnen Elementen des Moduls;
- ein Modul zum Trennen der zuvor derivatisierten flüchtigen Fettsäuren von Interesse:
∘ wenigstens eine monolithische gepfropfte Siliciumoxidtrennsäule,
∘ wenigstens ein Injektionsmittel, zum Beispiel ein Injektionselektroventil, das vorteilhafterweise ferngesteuert werden kann,
∘ eine Injektionsschleife,
∘ Mittel zum Lagern der Lösungen, das das Eluieren und Reinigen der Trennsäule zulässt;
∘ Mittel zum Verbinden zwischen den einzelnen Elementen des Moduls.

13. Analysevorrichtung nach Anspruch 12, **dadurch gekennzeichnet, dass** sie ferner ein Messmodul zum Quantifizieren der flüchtigen Fettsäuren umfasst.

## Claims

1. Method for separating volatile fatty acids in a sample by means of low pressure chromatography in which:
- in a step a), pre-derivatization is carried out of the volatile fatty acids contained in the sample;
- in a step b), said volatile fatty acids pre-derivatized in step a) are separated on a grafted monolithic silica column.

2. Method for separating volatile fatty acids in a sample by means of low pressure chromatography according to claim 1, in which:
- in a step a), pre-derivatization is carried out of the volatile fatty acids contained in the sample;
- in a step b), said volatile fatty acids pre-derivatized in step a) are separated on a grafted monolithic silica column;
- in a step c), the absorbance and/or transmittance and/or fluorescence values resulting from the pre-derivatized volatile fatty acids separated in step b) are measured;
- in a step d), the pre-derivatized volatile fatty acids are quantified.

3. Method according to any one of claims 1 or 2, **characterized in that** it is carried out continuously.

4. Method according to any one of claims 1 to 3, **characterized in that** the pre-derivatization step a) comprises:
- a first sub-step 1, in which a sample to be analyzed is mixed with a solution of at least one primary activating agent of the carbons bearing carboxylic functional groups and this mixture is incubated for a period comprised between 2 and 8 minutes, preferentially between 4 and 6 minutes;
- in a second sub-step 2, a fluorescent primary amine is added to the mixture obtained in the first sub-step 1;
- in a third sub-step 3, the mixture obtained in the sub-step 2 is incubated for a period comprised between 0 and 5 minutes, preferentially 1 minute.

5. Method according to claim 4, **characterized in that** the primary activating agent of the carbons bearing carboxylic functional groups is selected from the carbodiimides, such as for example 1-ethyl-3-(3-dimethylaminopropyl)-carbodiimide (EDC) or *N*-cyclohexyl-*N*'-(2-morpholinoethyl)carbodiimide methyl-*p*-toluenesulfonate (CMC), or even N,N'-dicyclohexylcarbodiimide (DCC), N,N'-diisopropylcarbodiimide (DIC), bis(trimethylsilyl)carbodiimide (BTSC), and preferentially EDC or CMC, very preferentially EDC.

6. Method according to one of claims 4 or 5, **characterized in that** the primary activating agent is at a concentration comprised between 1 and 200 mg per ml of the sample to be analyzed, preferentially between 5 and 30 mg and very preferentially 15 mg per ml of the sample to be analyzed.

7. Method according to any one of claims 4 to 6, **characterized in that**, in the first sub-step 1, the sample is also mixed with a solution comprising at least one secondary activating agent selected from N-hydroxysuccinimide (NHS) or 1-hydroxybenzotriazole (HOBT) or tetrafluorophenol (TTP) or 1-hydroxy-7-azabenzotriazole (HOAT), preferentially HOAT.

8. Method according to claim 7, **characterized in that** the secondary activating agent is used at a concentration comprised between 0 and 100 mg per ml of the sample to be analyzed, preferentially between 25 and 70 mg and very preferentially 60 mg per ml of the sample to be analyzed.

9. Method according to any one of claims 4 to 8, **characterized in that** the fluorescent primary amine is a compound of the benzofurazan family or the aminophenanthrene family or the coumarin family or of the family of "dansyl" derivatives, N-1-ethylene diaminonaphthalene (EDAN) or 5-aminofluorescein (5-AF) or monodansylcadaverine (MDC) or Nile blue chloride (NBCI), preferentially EDAN.

10. Method according to any one of claims 4 to 9, **characterized in that** the fluorescent primary amine is used at a concentration comprised between 0.01 and 10 mg per ml of the sample to be analyzed, preferentially between 0.1 and 2 mg per ml of the sample to be analyzed, very preferentially 0.5 mg per ml of the sample to be analyzed.

11. Method according to any one of claims 1 to 10, **characterized in that** the column of step b) is selected from a monolithic column grafted with octadecyl (C18) or octyl (C8) groups, preferentially a monolithic column grafted with octadecyl (C18) groups.

12. Device for analysing volatile fatty acids by means of low pressure chromatography comprising at least two general modules, namely:
- a reaction module making it possible to carry out derivatization reactions of the volatile fatty acids of interest before separation, comprising:
∘ means for storing the samples to be analyzed and/or the reactants necessary for carrying out derivatization reactions of the volatile fatty acids of interest;
∘ suction means and means for exerting pressure on the samples and reactants, such as for example low pressure pumps, solenoid switching valves and/or micropumps of the solenoid type, automatic burettes, that advantageously can be controlled remotely;
∘ at least one reactor in which the derivatization reaction can be carried out, said reactor advantageously being able to be kept under stirring;
∘ connection means between each element of the module;
- a module for separating the previously derivatized volatile fatty acids of interest:
∘ at least one grafted monolithic silica separation column,
∘ at least one injection means, for example a solenoid injection valve that advantageously can be controlled remotely,
∘ an injection loop,
∘ means for storing the solutions allowing the elution and cleaning of the separation column;
∘ connection means between each element of the module.

13. Analysis device according to claim 12, **characterized in that** it also comprises a measuring module for quantifying the volatile fatty acids.
